# FASCICULE DE BREVET EUROPEEN

(11) **EP 2 021 239 B1**
(45) Date de publication et mention de la délivrance du brevet: **02.12.2009**
(21) Numéro de dépôt: 07731485.4
(22) Date de dépôt: 21.05.2007
(51) Int. Cl.: B64C 9/06, B64C 13/16, B64C 13/50, G05D 1/06, G05D 1/08

(54) **PROCÉDÉ ET DISPOSITIF DE PILOTAGE D'UN AÉRONEF OPTIMISANT LA COMMANDE DES AILERONS EN CONFIGURATION HYPERSUSTENTÉE**
FLUGVERFAHREN UND VORRICHTUNG FÜR EIN FLUGZEUG ZUR OPTIMIERUNG DER STEUERUNG VON QUERRUDERN IN EINER HOCHAUFTRIEBSKONFIGURATION
FLYING PROCESS AND DEVICE OF AN AIRCRAFT OPTIMIZING THE CONTROL OF AILERONS IN A HIGH-LIFT CONFIGURATION

(30) Priorité: 29.05.2006 FR 0604721
(43) Date de publication de la demande: 11.02.2009
(73) Titulaire: AIRBUS OPERATIONS, 31060 Toulouse (FR)
(72) Inventeur: DELAPLACE, Franck, 31300 Toulouse (FR); LAMBEAUX, Sophie, 31170 Tournefeuille (FR); SAUVINET, Frédéric, 31170 Tournefeuille (FR)
(74) Mandataire: Bonnetat, Christian
(86) Numéro de dépôt international: PCT/FR2007/000851
(87) Numéro de publication internationale: WO 2007/138179

(56) Documents cités:
- EP-A2- 0 075 966
- FR-A1- 2 425 379
- US-A- 2 407 401

## Description

La présente invention concerne un procédé et un dispositif de pilotage pour aéronef permettant d'optimiser la commande des ailerons en configuration hypersustentée.

On sait que, entre autres surfaces aérodynamiques mobiles, les deux ailes symétriques d'un aéronef peuvent comporter des becs de bord d'attaque et/ou des volets de bord de fuite aptes à engendrer l'hypersustentation desdites ailes lorsqu'ils sont déployés, ainsi que des ailerons pour commander ledit aéronef en roulis. Dans une telle configuration hypersustentée, les ailerons sont usuellement braqués vers le bas pour prendre une position neutre compensée, participant à l'hypersustentation globale de l'aéronef.

Cependant, à partir d'une telle position neutre compensée, l'efficacité en roulis desdits ailerons est relativement faible, de sorte que les performances en roulis de l'aéronef sont fortement dégradées. De plus, il résulte de cette faible efficacité en roulis que l'aéronef présente une marge réduite par rapport au phénomène de pompage piloté.

La présente invention a pour objet de remédier à ces inconvénients.

A cette fin, selon l'invention, le procédé de pilotage d'un aéronef comportant deux ailes symétriques pourvues :
- de surfaces aérodynamiques d'hypersustentation mobiles, aptes à conférer auxdites ailes soit une configuration lisse, soit au moins une configuration hypersustentée ; et
- d'ailerons de commande en roulis, dont la position neutre correspond à un braquage nul, lorsque lesdites ailes présentent ladite configuration lisse,
est remarquable en ce que, en configuration hypersustentée desdites ailes, on confère auxdits ailerons, de façon identique sur les deux ailes et abstraction faite d'un éventuel ordre de commande en roulis :
- lorsque l'incidence et la vitesse de l'aéronef sont respectivement inférieure à un seuil d'incidence et supérieure à un seuil de vitesse, un premier état correspondant à une position braquée vers le haut d'un angle, par exemple au plus égal à 5°, tel que lesdits ailerons conservent quasiment intacte leur efficacité en roulis ; et
- lorsque l'incidence de l'aéronef est égale ou supérieure audit seuil d'incidence ou lorsque la vitesse de l'aéronef est égale ou inférieure audit seuil de vitesse, un second état correspondant :
   ■ soit à un premier braquage vers le bas de valeur correspondant au moins approximativement à la finesse maximale de l'aéronef, si celui-ci est en phase de décollage ou de redécollage,
   ■ soit à un second braquage vers le bas de valeur correspondant au moins approximativement à la portance optimale de l'aéronef, si celui-ci est en phase d'atterrissage.

Ainsi, grâce à la présente invention, on communique auxdits ailerons, lorsque l'aéronef est en configuration hypersustentée, non plus une seule position braquée, mais trois :
- lorsque l'aéronef est en approche d'atterrissage ou en fin de décollage, le braquage vers le haut des ailerons est suffisamment faible pour que lesdits ailerons présentent une excellente efficacité en roulis. De plus, dans cette position, les ailerons non seulement engendrent peu de bruit, mais encore combattent les tourbillons de sillage en engendrant un tourbillon local qui, associé aux autres tourbillons engendrés par l'avion, favorise la dissipation progressive desdits tourbillons de sillage ;
- lorsque l'aéronef atterrit, le braquage des ailerons correspond à la portance maximale, c'est-à-dire à la vitesse de décrochage la plus faible, et donc à la vitesse d'atterrissage la plus faible, ceci constituant des conditions optimales d'atterrissage. De plus, en phase d'atterrissage, le braquage des ailerons engendre une traînée maximale, ce qui favorise la décélération de l'aéronef ; et
- lorsque l'aéronef commence un décollage, le braquage des ailerons lui confère une bonne portance et une traînée pas trop élevée (la finesse correspondant au rapport de la portance sur la traînée), ce qui facilite donc l'envol de l'aéronef.

De préférence, afin de dynamiser le passage d'un état à l'autre, il est avantageux, d'une part, de déterminer la position de l'incidence α par rapport audit seuil d'incidence αs en comparant l'expression α+ K1.q audit seuil αs, K1 étant un coefficient constant positif et q étant la vitesse de tangage dudit aéronef (c'est-à-dire la dérivée par rapport au temps de ladite incidence α), et, d'autre part, de déterminer la position de la vitesse Vc de l'aéronef par rapport audit seuil de vitesse Vs en comparant l'expression Vc + K2.dVc/dt audit seuil Vs, K2 étant un coefficient constant positif et dVc/dt l'accélération dudit avion.

La valeur desdits seuils d'incidence et de vitesse dépend de la position d'hypersustentation desdites surfaces aérodynamiques d'hypersustentation et du nombre de Mach.

Le passage des ailerons d'un état à l'autre peut être réversible ou irréversible. Par exemple, après être passés dudit premier état au second, lesdits ailerons restent dans ledit second état même si les conditions d'incidence et de vitesse redeviennent conformes audit premier état. En revanche, après être passés dudit premier état au second, lesdits ailerons peuvent repasser, de préférence avec hystérésis, audit premier état lorsque les conditions d'incidence et de vitesse redeviennent conformes audit premier état.

Pour la mise en oeuvre du procédé conforme à la présente invention, on peut utiliser un dispositif monté à bord dudit aéronef et comportant :
- des premiers moyens de comparaison pour comparer ladite incidence α audit seuil d'incidence αs ;
- des seconds moyens de comparaison pour comparer ladite vitesse Vc audit seuil de vitesse Vs ;
- des moyens logiques de type OU recevant les résultats des comparaisons effectuées par lesdits premiers et seconds moyens de comparaison ;
- des premiers moyens de commutation pour choisir entre ledit premier braquage et ledit second braquage ; et
- des seconds moyens de commutation_{;} actionnés par lesdits moyens logiques pour choisir entre le résultat du choix desdits premiers moyens de commutation et ladite position braquée vers le haut d'un angle tel que lesdits ailerons conservent quasiment intacte leur efficacité en roulis.

Les figures du dessin annexé feront bien comprendre comment l'invention peut être réalisée. Sur ces figures, des références identiques désignent des éléments semblables.
La figure 1 montre en perspective schématique un avion civil gros porteur pourvu de becs et de volets hypersustentateurs, ainsi que d'ailerons.
Les figures 2, 3 et 4 sont des diagrammes illustrant respectivement l'efficacité en roulis, la finesse et la portance de l'avion de la figure 1 en fonction de l'angle de braquage des ailerons.
La figure 5 est le schéma synoptique d'un dispositif de mise en oeuvre du procédé conforme à la présente invention.

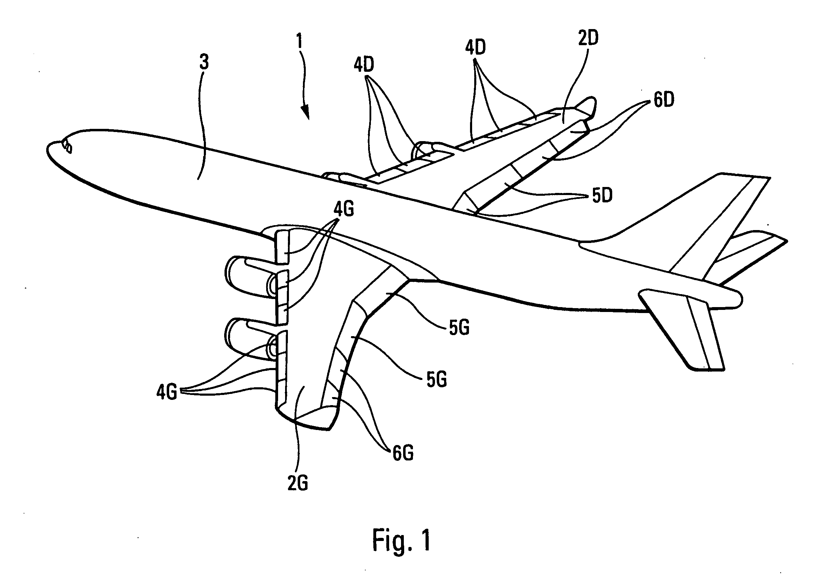

L'avion de transport civil 1, représenté schématiquement en perspective sur la figure 1, comporte deux ailes 2G et 2D en tous points symétriques l'une de l'autre par rapport au fuselage 3.

Les ailes 2G et 2D comportent respectivement des becs de bord d'attaque 4G, 4D, des volets de bord de fuite 5G, 5D (lesdits becs et volets constituant des surfaces aérodynamiques d'hypersustentation pour l'avion 1) et des ailerons 6G, 6D de commande en roulis.

De façon usuelle, les becs et les volets 4G, 4D ; 5G, 5D sont déployables et rétractables de façon à communiquer aux ailes 2G, 2D, et donc à l'avion 1, une configuration lisse lorsqu'ils sont rétractés et au moins une configuration hypersustentée lorsqu'ils sont déployés.

De même, les ailerons 6G, 6D sont articulés en rotation sur lesdites ailes 2G, 2D pour pouvoir prendre différentes positions de braquage par rapport à celles-ci.

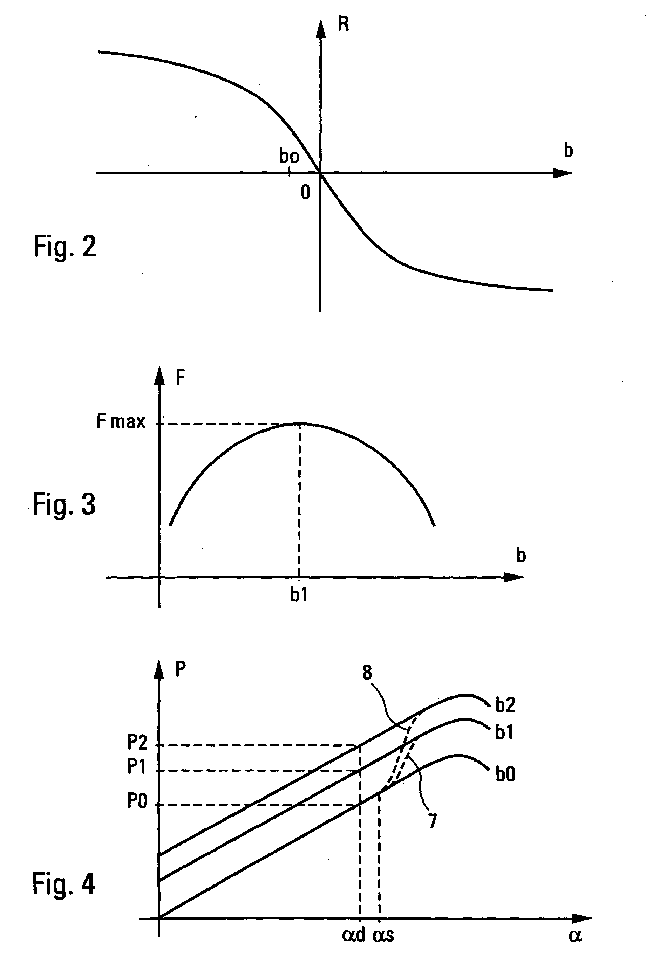

Sur la figure 2, on a représenté un diagramme connu illustrant l'efficacité en roulis R des ailerons 6G, 6D sur l'avion 1 en fonction de l'angle de braquage b desdits ailerons. Sur ce diagramme, les angles b positifs correspondent à un braquage vers le bas et les angles b négatifs à un braquage vers le haut. De ce diagramme connu, on constate aisément que l'efficacité en roulis R desdits ailerons est bonne tant que l'angle de braquage b prend une valeur proche de zéro. Ainsi, pour une valeur négative b0 proche de zéro, par exemple au plus égale à -5°, l'efficacité des ailerons en roulis est pratiquement aussi bonne que lorsque l'angle de braquage est nul.

De plus, sur la figure 3, on a représenté un autre diagramme connu illustrant la finesse F de l'avion 1, c'est-à-dire le rapport entre sa portance et sa traînée, en fonction dudit angle de braquage b des ailerons 6G, 6D. On peut y voir que ladite finesse passe par un maximum Fmax pour une valeur positive b1 dudit angle de braquage b.

Enfin, sur la figure 4, on a représenté un troisième diagramme connu illustrant la portance P de l'avion 1 en fonction de son incidence α, pour la valeur négative b0 et les valeurs positives b1 et b2 (avec b2 > b1) de l'angle de braquage b des ailerons 6G, 6D. Ce dernier diagramme illustre que, pour une valeur déterminée αd de α, la valeur correspondante PO, P1 ou P2 de la portance P est d'autant plus grande que la valeur de l'angle de braquage b est plus grande.

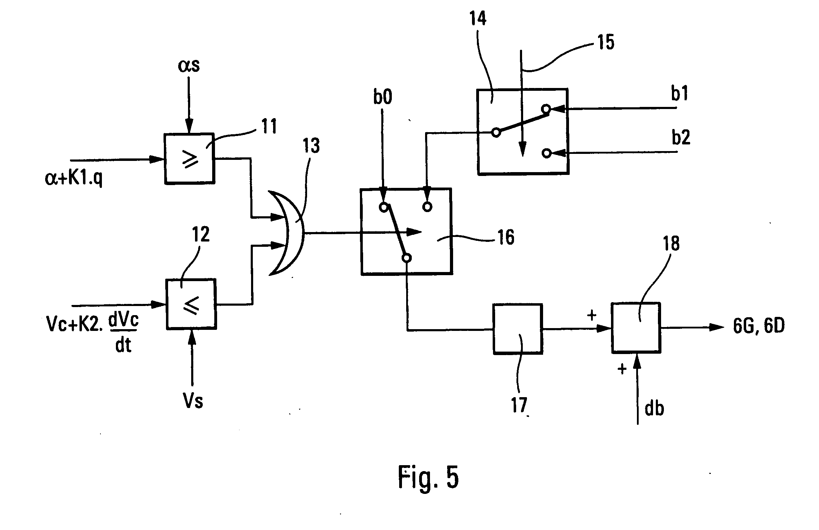

La présente invention est décrite ci-après en regard du schéma synoptique de la figure 5, en s'appuyant sur les caractéristiques illustrées par les figures 2, 3 et 4.

Le dispositif destiné à mettre en oeuvre le procédé selon l'invention et représenté par le schéma synoptique de la figure 5 comporte :
- un premier comparateur 11 recevant, sur une de ses entrées, la somme de l'incidence actuelle α de l'avion 1 et d'un terme K1.q, constitué du produit d'une constante positive K1 et de la vitesse de tangage actuelle q dudit avion et, sur son autre entrée, un seuil d'incidence αs, dont la valeur est fonction de la position des becs 4G, 4D, des volets 5G, 5D et du nombre de Mach, ledit premier comparateur 11 ne délivrant un signal que lorsque l'expression α+K1.q est égale ou supérieure à αs ;
- un second comparateur 12 recevant, sur une de ses entrées, la somme de la vitesse actuelle Vc de l'avion 1 et d'un terme K2.dVc/dt, constitué du produit d'une constante positive K2 et de la dérivée dVc/dt de la vitesse dudit avion et, sur son autre entrée, un seuil de vitesse Vs, dont la valeur est fonction de la position des becs 4G, 4D, des volets 5G, 5D et du nombre de Mach, ledit second comparateur 12 ne délivrant un signal que lorsque l'expression Vc + K2.dVc/dt est égale ou inférieure à Vs;
- une porte logique 13, de type OU, dont les entrées sont respectivement reliées aux sorties des comparateurs 11 et 12 ;
- un premier commutateur 14 recevant respectivement à ses entrées les deux valeurs positives b1 et b2 de l'angle de braquage b, correspondant respectivement à la finesse maximale Fmax et à la portance optimale P2 pour l'aéronef 1, ledit commutateur 14 adressant à sa sortie l'une ou l'autre de ces valeurs b1 ou b2 en réponse à un ordre 15 correspondant respectivement au fait que l'avion 1 est en phase de décollage (ou de redécollage) ou en phase d'atterrissage ;
- un second commutateur 16 recevant respectivement sur ses deux entrées la valeur négative b0 et l'une ou l'autre des valeurs positives b1 ou b2 (en fonction de la commande 15 du premier commutateur 14), ledit second commutateur 16 étant commandé par la sortie de la porte logique 13 pour adresser à un filtre 17, soit la valeur négative b0, soit l'une ou l'autre des valeurs positives b1, b2 ; et
- un additionneur 18 permettant d'additionner à un ordre de pilotage db des ailerons 6G, 6D, l'une ou l'autre des valeurs b0, b1 ou b2.

A la lumière du schéma synoptique de la figure 1, on comprend aisément que, en configuration hypersustentée des ailes 2G, 2D :
- lorsque l'expression α+K1.q est inférieure au seuil d'incidence αs et que l'expression Vc + K2.dVc/dt est supérieure au seuil de vitesse Vs, la porte logique 13 ne délivre aucun signal, de sorte que le braquage négatif b0 est imposé en commun aux ailerons 6G, 6D, à travers le filtre 17 et après éventuelle addition d'un ordre de commande de roulis db. De ce qui est montré par le diagramme de la figure 2, et des commentaires associés, on comprendra que le faible braquage négatif b0 permet une éventuelle commande en roulis efficace ; et
- lorsque l'expression α+K1.q est égale ou supérieure au seuil d'incidence αs ou que l'expression Vc+K2.dVc/dt est égale ou inférieure au seuil de vitesse Vs, la porte logique 13 fait basculer le second commutateur 16, de sorte que le braquage positif b1 correspondant au décollage ou le braquage positif b2 correspondant à l'atterrissage (en fonction de l'état du premier commutateur 15) est imposé en commun aux ailerons 6G, 6D, à travers le filtre 17 et après éventuelle addition d'un ordre de commande en roulis db. Les braquages b1 et b2 peuvent être respectivement de l'ordre de 5° et 10°.

Sur la figure 4, on a représenté, par des lignes pointillées 7 et 8 respectivement, le passage du braquage b0, d'une part, au braquage b1 ou b2, d'autre part, lorsque ledit second commutateur 16 bascule.

On remarquera que, grâce à l'action du filtre 17, le passage du braquage b0 au braquage b1 ou b2 se fait en douceur, sans à-coup.

Le second commutateur 16 peut être monostable et revenir spontanément à sa position initiale correspondant au braquage b0, dès que la porte logique 13 ne lui adresse plus aucun signal. En variante, le second commutateur 16 peut être bistable et rester dans sa position basculée correspondant au braquage b1 ou b2, même si la porte logique 13 ne lui adresse plus aucun signal.

## Revendications

1. Procédé de pilotage d'un aéronef (1) comportant deux ailes symétriques (2G, 2D) pourvues :
- de surfaces aérodynamiques d'hypersustentation mobiles (4G, 4D ; 5G, 5D), aptes à conférer auxdites ailes soit une configuration lisse, soit au moins une configuration hypersustentée ; et
- d'ailerons de commande en roulis (6G, 6D), dont la position neutre correspond à un braquage nul, lorsque lesdites ailes présentent ladite configuration lisse,
**caractérisé en ce que**, en configuration hypersustentée desdites ailes, on confère auxdits ailerons (6G, 6D), de façon identique sur les deux ailes et abstraction faite d'un éventuel ordre de commande en roulis (db) :
- lorsque l'incidence et la vitesse de l'aéronef sont respectivement inférieure à un seuil d'incidence (αs) et supérieure à un seuil de vitesse (Vs), un premier état (b0) correspondant à une position braquée vers le haut d'un angle tel que lesdits ailerons (6G, 6D) conservent quasiment intacte leur efficacité en roulis ; et
- lorsque l'incidence de l'aéronef est égale ou supérieure audit seuil d'incidence (αs) ou lorsque la vitesse de l'aéronef est égale ou inférieure audit seuil de vitesse (Vs), un second état correspondant :
■ soit à un premier braquage (b1) vers le bas de valeur correspondant au moins approximativement à la finesse maximale (Fmax) de l'aéronef, si celui-ci est en phase de décollage ou de redécollage,
■ soit à un second braquage (b2) vers le bas de valeur correspondant au moins approximativement à la portance optimale (P2) de l'aéronef, si celui-ci est en phase d'atterrissage.

2. Procédé selon la revendication 1,
**caractérisé en ce qu'**on détermine la position de l'incidence α par rapport audit seuil d'incidence αs en comparant l'expression α+K1.q audit seuil αs, K1 étant un coefficient constant positif et q étant la vitesse de tangage dudit aéronef.

3. Procédé selon la revendication 2,
**caractérisé en ce que** ledit seuil d'incidence αs dépend de la position desdites surfaces aérodynamiques d'hypersustentation et du nombre de Mach.

4. Procédé selon l'une des revendications 1 à 3,
**caractérisé en ce qu'**on détermine la position de la vitesse Vc de l'aéronef par rapport audit seuil de vitesse Vs en comparant l'expression Vc + K2.dVc/dt audit seuil Vs, K2 étant un coefficient constant positif et dVc/dt l'accélération dudit avion.

5. Procédé selon la revendication 4,
**caractérisé en ce que** ledit seuil de vitesse (Vs) dépend de la position desdites surfaces aérodynamiques d'hypersustentation et du nombre de Mach.

6. Procédé selon l'une des revendications 1 à 5,
**caractérisé en ce que**, après être passés dudit premier état au second, lesdits ailerons restent dans ledit second état même si les conditions d'incidence et de vitesse redeviennent conformes audit premier état.

7. Procédé selon l'une des revendications 1 à 5,
**caractérisé en ce que**, après être passés dudit premier état au second, lesdits ailerons repassent audit premier état lorsque les conditions d'incidence et de vitesse redeviennent conformes audit premier état.

8. Dispositif pour la mise en oeuvre du procédé selon l'une quelconque des revendications 1 à 7,
**caractérisé en ce qu'**il comporte :
- des premiers moyens de comparaison (11) pour comparer ladite incidence α audit seuil d'incidence αs ;
- des seconds moyens de comparaison (12) pour comparer ladite vitesse Vc audit seuil de vitesse Vs ;
- des moyens logiques (13) de type OU recevant les résultats des comparaisons effectuées par lesdits premiers et seconds moyens de comparaison (11,12);
- des premiers moyens de commutation (14) pour choisir entre ledit premier braquage et ledit second braquage ; et
- des seconds moyens de commutation (16), actionnés par lesdits moyens logiques (13) pour choisir entre le résultat du choix desdits premiers moyens de commutation (14) et ladite position braquée vers le haut d'un angle tel que lesdits ailerons (6G, 6D) conservent quasiment intacte leur efficacité en roulis.

9. Aéronef comportant le dispositif de la revendication 8 pour la mise en oeuvre du procédé spécifié sous l'une quelconque des revendications 1 à 7.

## Claims

1. A method for piloting an aircraft (1) comprising two symmetric wings (2G, 2D) provided:
- with movable lift-enhancing aerodynamic surfaces (4G, 4D; 5G, 5D), able to afford said wings either a smooth configuration, or at least one enhanced-lift configuration; and
- with roll control ailerons (6G, 6D), whose neutral position corresponds to a zero deflection, when said wings exhibit said smooth configuration,
**characterized in that**, in the enhanced-lift configuration of said wings, said ailerons (6G, 6D) are afforded, in an identical manner on the two wings and disregarding a possible roll control order (db):
- when the incidence and the speed of the aircraft are respectively less than an incidence threshold (αs) and greater than a speed threshold (Vs), a first state (b0) corresponding to a position deflected upwards by an angle such that said ailerons (6G, 6D) preserve their roll effectiveness almost intact; and
- when the incidence of the aircraft is equal to or greater than said incidence threshold (αs) or when the speed of the aircraft is equal to or less than said speed threshold (Vs), a second state corresponding:
• either to a first downward deflection (b1) of value corresponding at least approximately to the maximum finesse (Fmax) of the aircraft, if the latter is in the takeoff or re-takeoff phase,
• or to a second downward deflection. (b2) of value corresponding at least approximately to the optimal lift (P2) of the aircraft, if the latter is in the landing phase.

2. The method as claimed in claim 1,
**characterized in that** the position of the incidence α with respect to said incidence threshold αs is determined by comparing the expression α + K1.q with said threshold αs, K1 being a positive constant coefficient and q being the pitch rate of said aircraft.

3. The method as claimed in claim 2,
**characterized in that** said incidence threshold αs depends on the position of said lift-enhancing aerodynamic surfaces and the Mach number.

4. The method as claimed in one of claims 1 to 3,
**characterized in that** the position of the speed Vc of the aircraft with respect to said speed threshold Vs is determined by comparing the expression Vc + K2.dVc/dt with said threshold Vs, K2 being a positive constant coefficient and dVc/dt the acceleration of said airplane.

5. The method as claimed in claim 4,
**characterized in that** said speed threshold (Vs) depends on the position of said lift-enhancing aerodynamic surfaces and the Mach number.

6. The method as claimed in one of claims 1 to 5,
**characterized in that**, after being switched from said first state to the second, said ailerons remain in said second state even if the incidence and speed conditions again become in accordance with said first state.

7. The method as claimed in one of claims 1 to 5,
**characterized in that**, after being switched from said first state to the second, said ailerons switch back to said first state when the incidence and speed conditions again become in accordance with said first state.

8. A device for implementing the method as claimed in any one of claims 1 to 7,
**characterized in that** it comprises:
- first comparison means (11) for comparing said incidence α with said incidence threshold αs;
- second comparison means (12) for comparing said speed Vc with said speed threshold Vs;
- logic means (13) of OR type receiving the results of the comparisons performed by said first and second comparison means (11, 12);
- first switching means (14) for choosing between said first deflection and said second deflection; and
- second switching means (16), actuated by said logic means (13) for choosing between the result of the choice of said first switching means (14) and said position deflected upwards by an angle such that said ailerons (6G, 6D) preserve their roll effectiveness almost intact.

9. An aircraft implementing the method specified under any one of claims 1 to 7.

## Patentansprüche

1. Verfahren zur Steuerung eines Luftfahrzeuges (1), umfassend zwei symmetrische Flügel (2G, 2D), versehen mit:
- beweglichen aerodynamischen Flächen mit hohem Auftrieb (4G, 4D; 5G, 5D), die dazu geeignet sind, den Flügeln entweder eine glatte Konfiguration oder wenigstens eine Konfiguration mit hohem Auftrieb zu verleihen; und
- Rollsteuerquerruder (6G, 6D), deren neutrale Position einem Nullausschlag entspricht, wenn die Flügel die glatte Konfiguration aufweisen,
**dadurch gekennzeichnet, dass** bei der Konfiguration der Flügel mit hohem Auftrieb den Querrudern (6G, 6C) auf identische Weise auf den beiden Flügeln, und abgesehen von einem eventuellen Rollsteuerbefehl (db) Folgendes verliehen wird:
- wenn der Einfallswinkel und die Geschwindigkeit des Luftfahrzeuges geringer als eine Einfallsschwelle (αs) bzw. höher als eine Geschwindigkeitsschwelle (Vs) sind, ein erster Zustand (b0), der einer nach oben ausgeschlagenen Position mit einem derartigen Winkel entspricht, dass die Querruder (6G, 6D) ihre Rollwirksamkeit fast unverändert beibehalten; und
- wenn der Einfallswinkel des Luftfahrzeuges gleich oder höher als die Einfallsschwelle (αs) oder wenn die Geschwindigkeit des Luftfahrzeuges gleich oder niedriger als die Geschwindigkeitsschwelle (Vs) ist, ein zweiter Zustand, entsprechend:
• entweder einem ersten Ausschlag (b1) nach unten mit einem Wert, der mindestens ungefähr der maximalen reziproken Gleitzahl (Fmax) des Luftfahrzeuges entspricht, wenn dieses sich in der Phase des Abhebens oder des Wiederabhebens befindet.
• oder einem zweiten Ausschlag (b2) nach unten mit einem Wert, der mindestens ungefähr dem optimalen Auftrieb (P2) des Luftfahrzeuges entspricht, wenn dieses sich in der Phase der Landung befindet.

2. Verfahren nach Anspruch 1, **dadurch gekennzeichnet, dass** die Position des Einfallswinkels α bezüglich der Einfallsschwelle αs durch den Vergleich des Ausdrucks α + K1.q mit der Schwelle αs bestimmt wird, wobei K1 ein positiver konstanter Koeffizient und q die Neigungsgeschwindigkeit des Luftfahrzeuges ist.

3. Verfahren nach Anspruch 2, **dadurch gekennzeichnet, dass** die Einfallsschwelle αs von der Position der aerodynamischen Flächen mit hohem Auftrieb und von der Machzahl abhängt.

4. Verfahren nach einem der Ansprüche 1 bis 3, **dadurch gekennzeichnet, dass** die Position der Geschwindigkeit Vc des Luftfahrzeuges bezüglich der Geschwindigkeitsschwelle Vs durch den Vergleich des Ausdrucks Vc + K2.dVc/dt mit der Schwelle Vs bestimmt wird, wobei K2 ein positiver konstanter Koeffizient und dVc/dt die Beschleunigung des Flugzeuges ist.

5. Verfahren nach Anspruch 4, **dadurch gekennzeichnet, dass** die Geschwindigkeitsschwelle (Vs) von der Position der aerodynamischen Flächen mit hohem Auftrieb und der Machzahl abhängt.

6. Verfahren nach einem der Ansprüche 1 bis 5, **dadurch gekennzeichnet, dass** die Querruder, nachdem sie vom ersten Zustand in den zweiten Zustand gebracht wurden, im zweiten Zustand verbleiben, auch wenn die Bedingungen des Einfallswinkels und der Geschwindigkeit wieder mit dem ersten Zustand übereinstimmen.

7. Verfahren nach einem der Ansprüche 1 bis 5, **dadurch gekennzeichnet, dass** die Querruder, nachdem sie vom ersten Zustand in den zweiten Zustand gebracht wurden, in den ersten Zustand zurückkehren, wenn die Bedingungen des Einfallswinkels und der Geschwindigkeit wieder mit dem ersten Zustand übereinstimmen.

8. Vorrichtung zur Durchführung des Verfahrens nach einem der Ansprüche 1 bis 7, **dadurch gekennzeichnet, dass** sie Folgendes umfasst:
- erste Vergleichsmittel (11), um den Einfallswinkel α mit der Einfallsschwelle αs zu vergleichen;
- zweite Vergleichsmittel (12), um die Geschwindigkeit Vc mit der Geschwindigkeitsschwelle Vs zu vergleichen;
- logische Mittel (13) des Typs ODER, die die Ergebnisse der Vergleiche, durchgeführt von den ersten Vergleichsmitteln und von den zweiten Vergleichsmitteln (11, 12), empfangen;
- erste Kommutationsmittel (14), um zwischen dem ersten Ausschlag und dem zweiten Ausschlag zu wählen; und
- zweite Kommutationsmittel (16), betätigt durch die logischen Mittel (13), um zwischen dem Ergebnis der Wahl der ersten Kommutationsmittel (14) und der Position zu wählen, die nach oben um einen derartigen Winkel ausgeschlagen ist, dass die Querruder (6G, 6D) ihre Rollwirksamkeit fast unverändert beibehalten.

9. Luftfahrzeug, umfassend die Vorrichtung von Anspruch 8 für die Durchführung des Verfahrens, das in einem der Ansprüche 1 bis 7 spezifiziert wird.
